# EUROPÄISCHE PATENTSCHRIFT

(11) **EP 3 619 457 B1**
(45) Veröffentlichungstag und Bekanntmachung des Hinweises auf die Patenterteilung: **26.05.2021**
(21) Anmeldenummer: 18719816.3
(22) Anmeldetag: 18.04.2018
(51) Int. Cl.: F16M 11/24, F16M 11/28, F16H 1/16

(54) **STATIV**
TRIPOD
TRÉPIED

(30) Priorität: 03.05.2017 AT 503602017
(43) Veröffentlichungstag der Anmeldung: 11.03.2020
(73) Patentinhaber: Inveo OG, 4710 Grieskirchen (AT)
(72) Erfinder: GRABNER, Martin, 4710 Grieskirchen (AT)
(74) Vertreter: KLIMENT & HENHAPEL
(86) Internationale Anmeldenummer: PCT/EP2018/059930
(87) Internationale Veröffentlichungsnummer: WO 2018/202425

(56) Entgegenhaltungen:
- DE-C- 677 435
- FR-A1- 2 459 533

## Beschreibung

Die Erfindung betrifft ein Stativ mit einem Stativkopf zur Befestigung von Gerätschaften und einem am Stativkopf befestigten Schaft, der aus zumindest zwei teleskopartig ausziehbaren und zusammenschiebbaren Schaftteilen gebildet wird und mittels eines Feststellmechanismus in einstellbaren Längen arretierbar ist, sowie zumindest drei am Schaft ausschwenkbar gelagerten Standbeinen, wobei die Standbeine Zugorgane aufweisen, die mittels einer drehbar angeordneten Spule auf- und abwickelbar und mittels eines Spannelements spannbar sind, gemäß dem Oberbegriff von Anspruch 1.

Ein Stativ dient in bekannter Weise der stabilen Aufstellung von Gerätschaften wie beispielsweise Kameras, Leuchten, Mikrofonen, Laborgeräten oder Messinstrumenten. In herkömmlicher Weise wird das Stativ etwa als Dreibein mit drei Teleskopbeinen ausgeführt, die am Stativkopf ausschwenkbar angeordnet sind. Jedes Teleskopbein ist dabei mittels eines Feststellmechanismus in einstellbaren Längen arretierbar. Auf einem Stativanschluss des Stativkopfes kann in weiterer Folge ein Schwenkkopf montiert werden, auf dem die Gerätschaften befestigt werden und mit dem die Gerätschaften relativ zum Stativ verschwenkt werden können.

Der Aufbau eines Dreibeinstativs gestaltet sich aber zeitaufwändig, da jedes Teleskopbein ausgeschwenkt, einzeln ausgefahren und in der gewünschten Länge arretiert werden muss. Zudem ergeben sich aufgrund der drei Teleskopbeine im zusammengeschobenen Zustand ein hohes Packmaß und ein vergleichsweise hohes Gewicht.

Wird stattdessen ein einzelnes, zentrales Teleskoprohr verwendet, an dem drei Standbeine verschiebbar und ausschwenkbar gelagert sind, können Packmaß und Gewicht zwar reduziert werden, allerdings leidet die Stabilität der Aufstellung, insbesondere neigt das Teleskoprohr bei Belastung durch die darauf montierten Gerätschaften oder auch bei äußeren Belastungen wie etwa einer Windlast dazu sich zu verbiegen.

Daher wurde in der DE 677 435 vorgeschlagen bei Verwendung eines zentralen Teleskoprohres den Stativkopf durch Zugorgane wie Drähte, Schnüre, Ketten und dergleichen mit den Standbeinen zu verspannen. Jedem Standbein ist dabei ein Zugorgan zugeordnet, das vom Stativkopf außerhalb des Teleskoprohres zum betreffenden Standbein gespannt ist, wo es über eine Umlenkrolle in das Innere des betreffenden Standbeins geführt ist und über weitere Umlenkrollen innerhalb des Teleskoprohres zum Stativkopf geleitet wird, wo es auf einer Walze auf- und abgewickelt werden kann. Das Spannen der Zugorgane erfolgt über ein Spannelement, das als ein am Stativkopf angeordneter Drehringgriff ausgeführt ist.

Ein solcher Aufbau ist allerdings baulich aufwändig und erhöht wiederum das Packmaß und das Gewicht des Stativs. Zudem neigen die Vielzahl an Rollen und der entsprechende Zugorganmechanismus insbesondere bei Verschmutzung und Erschütterung dazu sich zu verklemmen.

Es ist daher das Ziel der Erfindung ein Stativ mit zentralem Teleskoprohr baulich einfach, mit vergleichsweise niedrigem Gewicht und einem im zusammengeschobenen Zustand geringem Packmaß auszuführen, aber dennoch eine hohe Stabilität der Aufstellung sicher zu stellen.

Diese Ziele werden durch die Merkmale von Anspruch 1 erreicht. Anspruch 1 bezieht sich auf ein Stativ mit einem Stativkopf zur Befestigung von Gerätschaften und einem am Stativkopf befestigten Schaft, der aus zumindest zwei teleskopartig ausziehbaren und zusammenschiebbaren Schaftteilen gebildet wird und mittels eines Feststellmechanismus in einstellbaren Längen arretierbar ist, sowie zumindest drei am Schaft ausschwenkbar gelagerten Standbeinen, wobei die Standbeine Zugorgane aufweisen, die mittels einer drehbar angeordneten Spule auf- und abwickelbar und mittels eines Spannelements spannbar sind. Erfindungsgemäß wird hierbei vorgeschlagen, dass die Spule mit einer in die aufwickelnde Drehrichtung der Spule wirkenden Rückstellfeder versehen ist, und ein Kupplungsmechanismus vorgesehen ist, der mit einem Bedienelement von einem Drehmodus, bei dem die Spule durch Zugwirkung der Zugorgane in eine abwickelnde Drehrichtung und von der Rückstellfeder in eine aufwickelnde Drehrichtung drehbar ist, in einen Spannmodus, bei dem die Spule gegenüber den Zugorganen arretiert und die Zugorgane mithilfe des Spannelements spannbar sind, überführbar ist.

Die erfindungsgemäßen Merkmale ermöglichen einerseits baulich einfache Ausführungen mit geringem Gewicht und Packmaß und andererseits eine rasche und stabile Aufstellung sowie Höhenverstellung des Stativs. Es ist lediglich das Bedienelement so einzustellen, dass sich der Kupplungsmechanismus im Drehmodus befindet. In diesem Zustand kann das zentrale Teleskoprohr über eine einfache und rasch vollziehbare Bewegung ausgefahren werden, wobei die dabei auftretende Zugwirkung der Zugorgane, die mit den Standbeinen einerseits und dem Stativkopf andererseits verbunden sind, die Spule entgegen der rückstellenden Kraft der Rückstellfeder abwickelt. Die zu Beginn am Schaft anliegenden Standbeine schwenken dabei aus und erreichen schließlich eine durch einen Anschlag definierte Endposition. Nachdem das zentrale Teleskoprohr in der gewünschten Länge eingestellt wurde, kann der Kupplungsmechanismus mithilfe des Bedienelements in den Spannmodus übergeführt werden. Die Spule wird dabei gegenüber den Zugorganen arretiert, sodass die Zugorgane mithilfe des Spannelements spannbar sind. Der Stativkopf wird somit mit den Standbeinen verspannt, wodurch eine stabile Aufstellung in Form eines Dreibeins erreicht werden kann. Dabei ist es auch möglich die Standbeine beim Ausfahren des Teleskoprohres in einem am Schaft anliegenden Zustand beizubehalten und danach die Arretierung der Spule im Spannmodus herbeizuführen, um eine Verwendung des Stativs als sogenanntes Monopod oder auch "Selviestick" zu ermöglichen. Um das Stativ abzubauen muss der Kupplungsmechanismus lediglich mithilfe des Bedienelements in den Drehmodus übergeführt werden, wodurch die Arretierung der Spule gegenüber den Zugorganen aufgehoben wird und die Spule der rückstellenden Wirkung der Rückstellfeder unterworfen wird. Das Teleskoprohr kann nun eingeschoben werden, wobei die Zugorgane mithilfe der Rückstellfeder wieder auf die Spule aufwickelt werden. Im eingeschobenen Zustand kann der Kupplungsmechanismus mithilfe des Bedienelements wieder in den Spannmodus übergeführt werden, um eine sichere Lagerung des Stativs zu gewährleisten. Bei Spule kann es sich dabei um eine Spule mit drei koaxial angeordneten Aufnahmen für die Zugorgane mit derselben, für gewöhnlich vertikalen Drehachse handeln, oder um einen Spulenaufbau mit je einer Spule für jedes der Zugorgane etwa mit jeweils horizontaler Drehachse, die somit nicht koaxial angeordnet sind, aber mit einem gemeinsamen, zentralen Spulenelement beispielsweise über ein Kegelgetriebe kämmen. Bei einer solchen Spulenanordnung wird unter dem im Folgenden als "Spule" bezeichneten Bauteil das gemeinsame, zentrale Spulenelement verstanden.

Vorzugsweise sind im Spannmodus die Zugorgane mittels eines in die aufwickelnde Drehrichtung der Spule wirkenden Spannelements spannbar sind. Insbesondere wird vorgeschlagen, dass das Spannelement als Betätigungshebel für eine mit zumindest einem Schraubengang versehene Welle ausgeführt ist, die mit einem Zahnrad kämmt, wobei das Zahnrad koaxial zur Spule angeordnet ist. Ein solches Getriebe wird auch als Schneckengetriebe bezeichnet, wobei die mit zumindest einem Schraubengang versehene Welle auch als Schnecke und das Zahnrad als Schneckenrad bezeichnet wird. Die Achsen der Schnecke und des Schneckenrades sind dabei in der Regel um 90° versetzt. Ein solches Schneckengetriebe besitzt den Vorteil der Selbsthemmung, die durch die Gleitreibung zwischen Schnecke und Schneckenrad auftritt. Mithilfe des Betätigungshebels kann somit ein Drehmoment auf das Schneckenrad ausgeübt werden, ein vom Schneckenrad ausgeübtes Drehmoment bewirkt aber kaum eine Stellbewegung der Schnecke.

Vorzugsweise handelt es sich bei dem von der mit zumindest einem Schraubengang versehene Welle und dem Zahnrad gebildeten Getriebe um ein Globoid-Schneckengetriebe. Bei einem Globoid-Schneckengetriebe besitzt die Schnecke eine globoidische Form und das Schneckenrad wird zylindrisch ausgeführt, sodass das Schneckenrad axial verschiebbar ist. Diese Ausführungsform verleiht dem Aufbau Vorteile, wie sie noch später ersichtlich werden.

Insbesondere kann nämlich der Kupplungsmechanismus so ausgeführt werden, dass er einen ersten Kupplungsteil, der an der Spule befestigt ist, sowie einen zweiten Kupplungsteil, der am Zahnrad befestigt und mit dem Zahnrad entlang der Spulenachse axial verschiebbar ist, umfasst, wobei der zweite Kupplungsteil im Drehmodus vom ersten Kupplungsteil beabstandet ist und mittels des Bedienelements entgegen der rückstellenden Kraft eines Rückstellelements in den Spannmodus überführbar sind, bei dem der zweite Kupplungsteil form- oder kraftschlüssig am ersten Kupplungsteil anliegt. Aufgrund der axialen Verschiebbarkeit des Schneckenrades kann das Schneckenrad somit in einfacher Weise vom Drehmodus in den Spannmodus übergeführt werden, wobei im Spannmodus mithilfe des Betätigungshebels ein Drehmoment auf das Schneckenrad und somit auf die Spule ausgeübt werden kann, das die Zugorgane auf die Spule aufwickelt und sie somit spannt. Die Zugwirkung der Zugorgane übt zwar ein gegenläufiges Drehmoment auf die Spule und somit das Schneckenrad aus, das aufgrund der Selbsthemmung des Schneckengetriebes jedoch nicht auf die Schnecke und somit den Betätigungshebel übertragen wird. Der form- oder kraftschlüssige Kontakt zwischen dem ersten und dem zweiten Kupplungsteil kann etwa mithilfe einer axialen Verzahnung der beiden Kupplungsteile erreicht werden, die im Spannmodus ineinander greift.

Das Bedienelement kann als ein separat vom Betätigungshebel ausgeführter Bedienhebel ausgeführt sein. In diesem Fall sind die Bedienung des Kupplungsmechanismus und das Spannen der Zugorgane über zwei Betätigungsvorgänge zu bewerkstelligen. Vorzugsweise wird jedoch vorgeschlagen, dass zu der mit zumindest einem Schraubengang versehenen Welle koaxial eine Exzenterscheibe angeordnet ist, die mit dem Betätigungshebel drehbar ist und mit ihrem Umfangsbereich am zweiten Kupplungsteil anliegt oder bei Verschwenken des Betätigungshebels mit dem zweiten Kupplungsteil in Anlage bringbar ist, wobei durch Verschwenken des Betätigungshebels und der dadurch vermittelten Drehbewegung der Exzenterscheibe der zweite Kupplungsteil von einer Beabstandung vom ersten Kupplungsteil, die dem Drehmodus entspricht, in einen Form- oder Kraftschluss mit dem ersten Kupplungsteil, der dem Spannmodus entspricht, bringbar ist. Bei dieser Ausführung wird erreicht, dass der Betätigungshebel mithilfe der Exzenterscheibe nun auch das Bedienelement ist. Die Beabstandung des zweiten Kupplungsteils vom ersten Kupplungsteil entspricht dabei dem Drehmodus, und der Form- oder Kraftschluss des zweiten Kupplungsteils mit dem ersten Kupplungsteil dem Spannmodus, bei der die Schwenkbewegung des Betätigungshebels eine Spann- oder Entlastungsbewegung für die Zugorgane bewirkt. Dabei kann dem Drehmodus auch ein erster Schwenkbereich des Betätigungshebels zugeordnet sein, bei dem der zweite Kupplungsteil vom ersten Kupplungsteil beabstandet ist, und dem Spannmodus ein zweiter Schwenkbereich des Betätigungshebels, bei dem erster und zweiter Kupplungsteil in einem Form- oder Kraftschluss stehen. Auf diese Weise kann mithilfe bloßer Betätigung des Betätigungshebels sowohl ein Wechsel zwischen Drehmodus und Spannmodus als auch ein Spannen der Zugorgane bewerkstelligt werden. Die Bedienung des Stativs wird somit sehr vereinfacht.

Eine zusätzliche Vereinfachung wird dadurch erreicht, dass auch die Arretierung der Schaftteile des Teleskopstativs vom Stativkopf aus bewerkstelligt werden kann. Hierzu wird zunächst vorgeschlagen, dass die Spule koaxial zur Schaftachse angeordnet ist. Eine solche Ausführung ist insbesondere dann vorteilhaft, wenn ein durch Rotation der Schaftteile um ihre Schaftachse betätigbarer Feststellmechanismus für den Schaft vorgesehen ist. Für einen solchen Feststellmechanismus kann in bevorzugter Weise vorgesehen sein, dass am Stativkopf ein die Rotation von Schaftteilen um ihre Schaftachse bewirkendes Feststellelement angeordnet ist, insbesondere kann es sich bei dem Feststellelement um den Betätigungshebel handeln. Beim Verschwenken des Betätigungshebels wird nämlich eine Rotation des Schneckenrades herbeigeführt, die nun dazu verwendet werden kann, eine relative Rotation der Schaftteile zueinander um ihre Schaftachse herbeizuführen und somit den Feststellmechanismus zu bedienen.

Hierfür wird ein neuartiger Aufbau des teleskopartig ausziehbaren und zusammenschiebbaren Schaftes vorgeschlagen. Dieser neuartige Aufbau zeichnet sich dadurch aus, dass der Schaft einen inneren Teleskopaufbau, der aus inneren Schaftteilen gebildet wird, und einen äußeren Teleskopaufbau, der aus teleskopartig ausziehbaren und zusammenschiebbaren sowie drehfest miteinander verbundenen, äußeren Schaftteilen gebildet wird, umfasst, wobei der innere Teleskopaufbau innerhalb des innersten Schaftteiles des äußeren Teleskopaufbaus angeordnet ist, und der Feststellmechanismus Klemmelemente umfasst, die jeweils mit den inneren Schaftteilen drehfest verbunden sind und in einer arretierenden Drehrichtung um die Schaftachse in einen Reibschluss mit einer Innenfläche eines äußeren Schaftteiles bringbar sind. Der innere Teleskopaufbau ist relativ zum äußeren Teleskopaufbau um die gemeinsame Schaftachse drehbar. Falls der innere Teleskopaufbau aus zumindest zwei inneren Schafteilen besteht, die teleskopartig ausziehbar und zusammenschiebbar sind, so sind auch diese inneren Schaftteile drehfest miteinander verbunden. Wird etwa der äußerste Schaftteil des inneren Teleskopaufbaus um die Schaftachse verdreht, verdreht sich der gesamte innere Teleskopaufbau aufgrund der drehfesten Verbindung der inneren Schaftteile relativ zu den Schaftteilen des äußeren Teleskopaufbaus. Diese Drehbewegung kann verwendet werden, um Klemmelemente, die jeweils mit den inneren Schaftteilen drehfest verbunden sind, in einer arretierenden Drehrichtung um die Schaftachse in einen Reibschluss mit einer Innenfläche eines äußeren Schaftteiles zu bringen. Jedes der Schaftteile des inneren Teleskopaufbaus ist dabei mit einem Klemmelement versehen, das in einen Reibschluss mit einem ihm zugeordneten Schaftteil des äußeren Teleskopaufbaus bringbar ist.

An dieser Stelle sei erwähnt, dass es bei einer besonders einfachen Ausführungsform denkbar wäre, dass der äußere Teleskopaufbau bloß zwei Schaftteile umfasst. In diesem Fall kann mit einem einzigen Schaftteil für den inneren Teleskopaufbau das Auslangen gefunden werden.

Zusätzlich wird vorzugsweise vorgeschlagen, dass ein solches in einen Reibschluss mit einer Innenfläche eines äußeren Schaftteiles bringbares Klemmelement am nächstinnenliegenden äußeren Schaftteil um die Schaftachse drehbar befestigt ist. Das Ausschieben und Zusammenschieben der beiden Teleskopaufbauten wird nämlich in der Regel durch den äußeren Teleskopaufbau bewerkstelligt. Werden die Schaftteile des äußeren Teleskopaufbaus axial verschoben, werden nun auch die Klemmelemente und somit die Schaftteile des inneren Teleskopaufbaus mitbewegt. Die Klemmelemente können sich aber dennoch bei einer durch die Schaftteile des inneren Teleskopaufbaus vermittelten, arretierenden Drehbewegung relativ zum nächstinnenliegenden äußeren Schaftteil drehen.

Hinsichtlich der Ausführung der Klemmelemente wird vorzugsweise vorgeschlagen, dass die Innenflächen der äußeren Schaftteile konvex nach außen gewölbt sind und die Klemmelemente jeweils als Exzenter-Klemmelemente mit konvexen Umfangsbereichen ausgeführt sind, die in einer arretierenden Drehrichtung um die Schaftachse in einen Reibschluss mit der Innenfläche eines äußeren Schaftteiles bringbar sind, der in entgegengesetzter Drehrichtung wieder lösbar ist. Das Klemmelement ist etwa scheibenförmig ausgeführt und weist in seinem Umfangsverlauf konvexe Exzenterbereiche auf, welche zwischen einem minimalen und einem maximalen Durchmesser, gemessen von der Schaftachse, verlaufen. Das Klemmelement kann gemäß einer folgend noch genauer beschriebenen Ausführungsform etwa durch sechs Sektoren gebildet werden, wobei drei Sektoren als Kreissektoren ausgeführt sind, deren Kreisbögen auf einem inneren Kreis liegen, und drei Sektoren einen Bogen aufweisen, der jeweils außerhalb des inneren Kreises liegt und dessen Abstand zum Mittelpunkt des inneren Kreises zur Bildung der konvexen Exzenterbereiche von einem minimalen zu einem maximalen Abstand variiert.

Die konvexen Innenflächen der äußeren Schaftteile können etwa so ausgeführt werden, dass sie im Querschnitt dreiecksförmig mit nach außen gebogenen Seiten erscheinen, die jeweils durch Kreisbögen beschrieben werden können, deren Durchmesser größer ist als der maximale Durchmesser des Klemmelements. Im Grenzfall kann die Krümmung somit auch verschwinden, sodass die Innenflächen der äußeren Schaftteile im Querschnitt dreiecksförmig erscheinen. Der minimale Abstand einer Innenfläche eines äußeren Schaftteiles von der Schaftachse ist jedenfalls größer als der minimale Durchmesser und kleiner als der maximale Durchmesser der Exzenterbereiche des Klemmelements. Bei Verdrehen des Klemmelements um die Schaftachse entsteht dadurch ein Reibschluss mit der Innenfläche des äußeren Schaftteiles.

Die Erfindung wird in weiterer Folge anhand von Ausführungsbeispielen mithilfe der beiliegenden Zeichnungen näher erläutert. Hierbei zeigen die
Fig. la eine Seitenansicht einer Ausführungsform eines erfindungsgemäßen Stativs mit Schwenkkopf und montierter Gerätschaft bei ausgezogenem Teleskoprohr,
Fig. 1b eine Seitenansicht einer Ausführungsform eines erfindungsgemäßen Stativs ohne Schwenkkopf und ohne montierter Gerätschaft bei eingeschobenem Teleskoprohr,
Fig. 2 eine Ausführungsform des Kupplungsmechanismus und des als Betätigungshebel ausgeführten Spannelements im Drehmodus,
Fig. 3 eine Ausführungsform des Kupplungsmechanismus und des Spannelements nach Absolvierung eines ersten Schwenkbereiches durch den Betätigungshebel und somit Beendigung des Drehmodus und bei Beginn des Spannmodus,
Fig. 4 eine Ausführungsform des Kupplungsmechanismus und des Spannelements im Spannmodus nach Absolvierung eines zweiten Schwenkbereiches durch den Betätigungshebel,
Fig. 5 eine Darstellung des Betätigungshebels und des Kupplungsmechanismus von oben gesehen,
Fig. 6 eine Ausführungsform des Schaftes mit innerem Teleskopaufbau und äußerem Teleskopaufbau im ausgeschobenen Zustand des Schaftes,
Fig. 7 eine Ausführungsform des Schaftes der Fig. 6 im eingeschobenen Zustand des Schaftes,
Fig. 8 eine Schnittdarstellung für den Schaft der Fig. 6 und 7 im eingeschobenen Zustand, und die
Fig. 9 eine Ausführungsform des Klemmelements für einen Schaft gemäß der Ausführungsform der Fig. 6 bis 8.

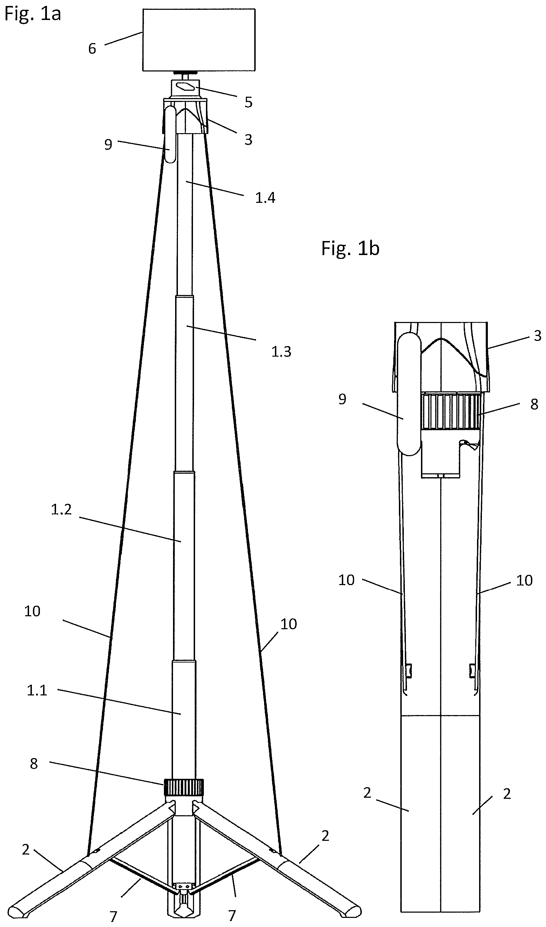

Zunächst wird auf die Fig. 1 Bezug genommen, die eine Seitenansicht einer Ausführungsform eines erfindungsgemäßen Stativs mit einem als zentrales Teleskoprohr ausgeführten Schaft 1 im ausgezogenen Zustand (Fig. 1a) und im eingeschobenen Zustand (Fig. 1b) zeigen. Der Aufbau des Teleskoprohres wird in weiterer Folge noch genauer beschrieben werden, an dieser Stelle sei lediglich erwähnt, dass das Teleskoprohr von einem äußeren Teleskopaufbau und einem inneren Teleskopaufbau gebildet wird, wobei in der Fig. 1 nur die Schaftteile 1.1, 1.2, 1.3 und 1.4 des äußeren Teleskopaufbaus ersichtlich sind, die in weiterer Folge auch als äußere Schaftteile 1.n bezeichnet werden. Die Schaftteile 1.5, 1.6 und 1.7 des inneren Teleskopaufbaus, die in weiterer Folge auch als innere Schaftteile l.m bezeichnet werden, sind innerhalb des äußeren Teleskopaufbaus angeordnet und daher in der Fig. 1 nicht zu sehen.

Auf dem Stativ ist ein Stativkopf 3 befestigt, der auch einen Stativanschluss für einen Schwenkkopf 5 aufweisen kann, auf dem die Gerätschaften 6 befestigt werden und mit dem die Gerätschaften 6 leichter relativ zum Stativ verschwenkt werden können. Am äußersten Schaftteil 1.1 sind drei Standbeine 2 ausschwenkbar und im gezeigten Ausführungsbeispiel auch verschiebbar gelagert. Im ausgeschwenkten Zustand gemäß der Fig. la sind auch Streben 7 ersichtlich, die die Standbeine 2 jeweils zusätzlich mit dem äußersten Schaftteil 1.1 verbinden. Beim Ausschwenken der Standbeine 2 gleitet zudem ein zentraler Befestigungsring 8 am äußersten Schaftteil 1.1 entlang, in Bezug auf die Fig. la nach unten. Die Begrenzung des Ausschwenkwinkels der Standbeine 2 wird durch einen Anschlag bewirkt, der im gezeigten Ausführungsbeispiel durch die Arretierung des Befestigungsringes 8 in Kombination mit den Streben 7 stattfindet. Sobald sich der Befestigungsring 8 axial nicht mehr verschieben lässt, ist dadurch auch der Anstellwinkel der Standbeine 2 nicht mehr veränderbar. Beim Einschwenken der Standbeine 2 gleitet der zentrale Befestigungsring 8 am äußersten Schaftteil 1.1 in Bezug auf die Fig. la nach oben, wo er bei Bedarf gegenüber dem äußersten Schaftteil 1.1 arretiert werden kann, um eine sicherer Lagerungsposition der Standbeine 2 am äußersten Schaftteil 1.1 zu gewährleisten.

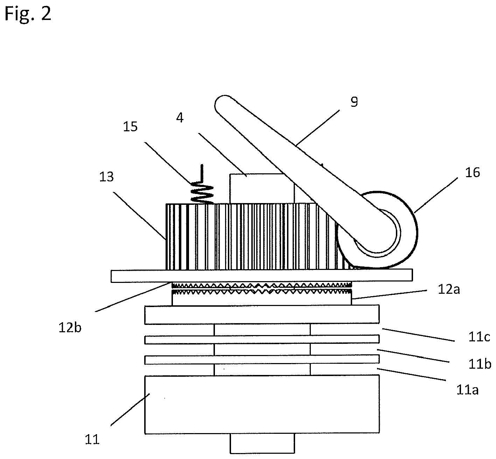

In der Fig. 1 ist ferner der Betätigungshebel 9 ersichtlich, dessen Funktion in weiterer Folge noch näher erläutert werden wird. Des Weiteren sind die Zugorgane 10 zu sehen, die in der ausgeschobenen Position des Teleskoprohres schräg außen vom Stativkopf 3 zu den Standbeinen 2 verlaufen und jedes der Standbeine 2 mit dem Stativkopf 3 verspannen. Die Zugorgane 10 sind etwa als Seile ausgeführt und können die Standbeine 2 in ihrer ausgeschwenkten Lage deshalb verspannen, weil die Standbeine 2 einen durch einen Anschlag begrenzten Ausschwenkwinkel aufweisen. Das Verspannen der Zugorgane 10 wird in weiterer Folge anhand der Fig. 2 bis 5 erläutert.

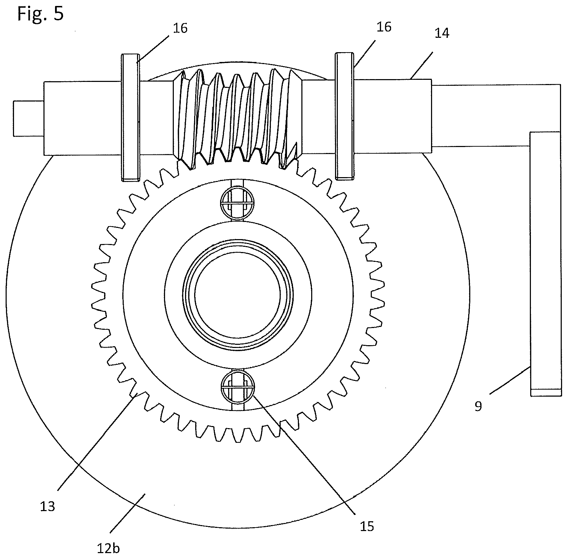

Die Fig. 2 bis 5 zeigen dabei eine Ausführungsform des Kupplungsmechanismus und des als Betätigungshebel 9 ausgeführten Spannelements. Die Zugorgane 10 sind mittels einer am Stativkopf 3 um eine Spulenwelle 4 drehbar angeordneten Spule 11 auf- und abwickelbar, wobei für jedes der drei Zugorgane 10 ein eigener Spulenbereich 11a, 11b, 11c vorgesehen ist. Die Spule 11 ist mit einer in die aufwickelnde Drehrichtung der Spule 11 wirkenden Rückstellfeder (in den Fig. 2 bis 5 nicht ersichtlich) versehen, die etwa als Torsionsfeder ausgeführt sein kann. Werden die Zugorgane 10 abgewickelt, wird die Rückstellfeder gespannt. Beim Entlasten des Zuges bewirkt die Rückstellfeder somit einen Aufwickelvorgang der Zugorgane 10 auf die Spule 11. Oberhalb der Spule 11 befindet sich der Kupplungsmechanismus, der einen ersten Kupplungsteil 12a, der an der Spule 11 befestigt ist, einen zweiten Kupplungsteil 12b, der an einem als Stirnrad ausgeführten Zahnrad 13 befestigt ist, sowie eine mit einem Schraubengang versehene Welle 14 umfasst, die mit dem Zahnrad 13 kämmt und über den Betätigungshebel 9 gedreht werden kann (siehe Fig. 5). Das Zahnrad 13 ist koaxial zur Spule 11 angeordnet. Die mit einem Schraubengang versehene Welle 14 und das Zahnrad 13 bilden vorzugsweise ein Globoid-Schneckengetriebe. Bei einem Globoid-Schneckengetriebe besitzt die als Schnecke ausgeführte Welle 14 eine globoidische Form und das als Schneckenrad bezeichnete Zahnrad 13 wird zylindrisch ausgeführt, sodass das Zahnrad 13 axial verschiebbar ist. Das Zahnrad 13 und somit auch der zweite Kupplungsteil 12b werden aber mittels eines Rückstellelements 15, das etwa als Federelement ausgeführt ist, in einer Position gehalten, bei der der zweite Kupplungsteil 12b vom ersten Kupplungsteil 12a beabstandet ist (Fig. 2).

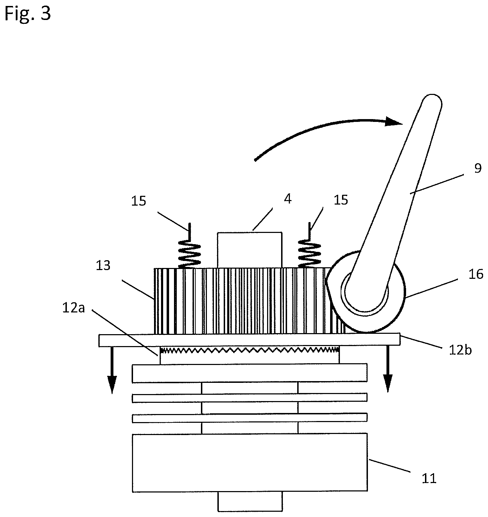

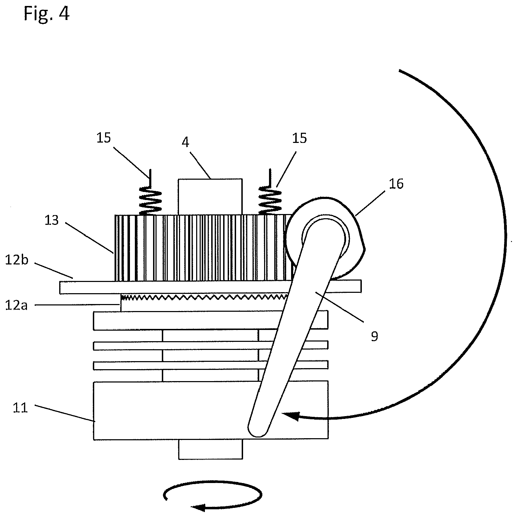

Zu der mit einem Schraubengang versehenen Welle 14 ist koaxial eine Exzenterscheibe 16 auf der Welle 14 befestigt, die beim Verschwenken des Betätigungshebels 9 mit der Welle 14 somit mitgedreht wird. Die Exzenterscheibe 16 liegt mit ihrem Umfangsbereich am zweiten Kupplungsteil 12b an, oder kann bei Verschwenken des Betätigungshebels 9 mit dem zweiten Kupplungsteil 12b in Anlage gebracht werden, wobei durch Verschwenken des Betätigungshebels 9 und der dadurch vermittelten Drehbewegung der Exzenterscheibe 16 der zweite Kupplungsteil 12b von einer Beabstandung vom ersten Kupplungsteil 12a, die dem Drehmodus entspricht (siehe Fig. 2), in einen Form- oder Kraftschluss mit dem ersten Kupplungsteil 12a, der dem Spannmodus entspricht, bringbar ist (siehe Fig. 3 und 4). Dabei belastet die Exzenterscheibe 16 den zweiten Kupplungsteil 12b und bewegt ihn in eine axiale Richtung entgegen der rückstellenden Kraft des Rückstellelements 15, sodass der zweite Kupplungsteil 12b in Form- oder Kraftschluss mit dem ersten Kupplungsteil 12a gerät und dort gehalten wird (siehe Fig. 3 und 4). Im Drehmodus des Kupplungsmechanismus steht der zweite Kupplungsteil 12b somit nicht in Anlage mit dem ersten Kupplungsteil 12a, sodass die Spule 11 daher unabhängig vom Zahnrad 13 und der Welle 14 frei drehbar ist. Im Spannmodus des Kupplungsmechanismus steht der zweite Kupplungsteil 12b in Anlage mit dem ersten Kupplungsteil 12a, sodass die Spule 11 durch die Selbsthemmung des Schneckengetriebes arretiert ist. Die Spule 11 dreht sich jedoch im Spannmodus bei einem Verschwenken des Betätigungshebels 9 mit dem Zahnrad 13 mit. Diese Drehbewegung der Spule 11 wird dazu genutzt die Zugorgane 10 auf die Spule 11 aufzuwickeln und dadurch zu spannen. Der Betätigungshebel 9 wirkt somit auch als Spannelement. Mithilfe bloßer Betätigung des Betätigungshebels 9 kann dabei sowohl ein Wechsel zwischen Drehmodus und Spannmodus als auch ein Spannen und Entlasten der Zugorgane 10 bewerkstelligt werden.

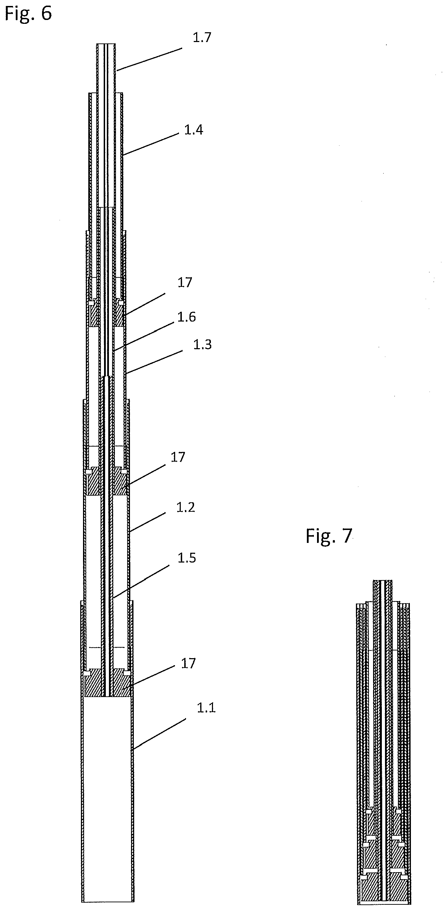

Eine zusätzliche Vereinfachung wird dadurch erreicht, dass auch die Arretierung der Schaftteile 1.n, 1.m des Teleskopstativs vom Stativkopf 3 aus bewerkstelligt werden kann, wie nun anhand der Fig. 6 bis 9 erläutert wird. Hierzu ist ein durch Rotation von Schaftteilen 1.n, 1.m um ihre Schaftachse betätigbarer Feststellmechanismus für den Schaft 1 vorgesehen. Dieser Feststellmechanismus wird ebenfalls durch den Betätigungshebel 9 bedient. Beim Verschwenken des Betätigungshebels 9 wird nämlich wie erwähnt eine Rotation des Zahnrades 13 herbeigeführt, die nun dazu verwendet werden kann, um eine Rotation der inneren Schaftteile 1.m um ihre Schaftachse herbeizuführen und somit den Feststellmechanismus zu bedienen.

Hierfür wird ein neuartiger Aufbau des teleskopartig ausziehbaren und zusammenschiebbaren Schaftes vorgeschlagen. Dieser neuartige Aufbau zeichnet sich dadurch aus, dass der Schaft einen inneren Teleskopaufbau, der im gezeigten Ausführungsbeispiel der Fig. 6 bis 8 aus drei teleskopartig ausziehbaren und zusammenschiebbaren sowie drehfest miteinander verbundenen, inneren Schaftteilen 1.m gebildet wird, und einen äußeren Teleskopaufbau, der im gezeigten Ausführungsbeispiel der Fig. 6 bis 8 aus vier teleskopartig ausziehbaren und zusammenschiebbaren sowie drehfest miteinander verbundenen, äußeren Schaftteilen 1.n gebildet wird, umfasst, wobei der innere Teleskopaufbau innerhalb des innersten Schaftteiles 1.4 des äußeren Teleskopaufbaus angeordnet ist. Der Feststellmechanismus umfasst ferner Klemmelemente 17, die jeweils mit den inneren Schaftteilen 1.m drehfest verbunden sind und in einer arretierenden Drehrichtung um die Schaftachse in einen Reibschluss mit einer Innenfläche eines äußeren Schaftteiles 1.n bringbar sind. Der innere Teleskopaufbau ist relativ zum äußeren Teleskopaufbau um die gemeinsame Schaftachse drehbar. Wird etwa der äußerste Schaftteil 1.7 des inneren Teleskopaufbaus um die Schaftachse verdreht, verdreht sich der gesamte innere Teleskopaufbau aufgrund der drehfesten Verbindung der inneren Schaftteile 1.m relativ zu den Schaftteilen 1.n des äußeren Teleskopaufbaus. Diese Drehbewegung kann verwendet werden, um die Klemmelemente 17, die jeweils mit den inneren Schaftteilen 1.m drehfest verbunden sind, in einer arretierenden Drehrichtung um die Schaftachse in einen Reibschluss mit einer Innenfläche eines äußeren Schaftteiles 1.n zu bringen. Jedes der Schaftteile 1.m des inneren Teleskopaufbaus ist dabei mit einem Klemmelement 17 versehen, das in einen Reibschluss mit einem ihm zugeordneten Schaftteil 1.n des äußeren Teleskopaufbaus bringbar ist.

Zusätzlich wird vorzugsweise vorgeschlagen, dass ein solches in einen Reibschluss mit einer Innenfläche eines äußeren Schaftteiles 1.n bringbares Klemmelement 17 am nächstinnenliegenden äußeren Schaftteil 1.n um die Schaftachse drehbar befestigt ist. Das Ausschieben und Zusammenschieben der beiden Teleskopaufbauten wird nämlich in der Regel durch den äußeren Teleskopaufbau bewerkstelligt. Werden die Schaftteile 1.n des äußeren Teleskopaufbaus axial verschoben, werden nun auch die Klemmelemente 17 und somit die Schaftteile 1.m des inneren Teleskopaufbaus mitbewegt. Die Klemmelemente 17 können sich aber dennoch bei einer durch die Schaftteile 1.m des inneren Teleskopaufbaus vermittelten, arretierenden Drehbewegung relativ zum nächstinnenliegenden äußeren Schaftteil 1.n drehen, um es in einen Reibschluss mit einer Innenfläche des nächstfolgenden äußeren Schaftteiles 1.n bringen zu können.

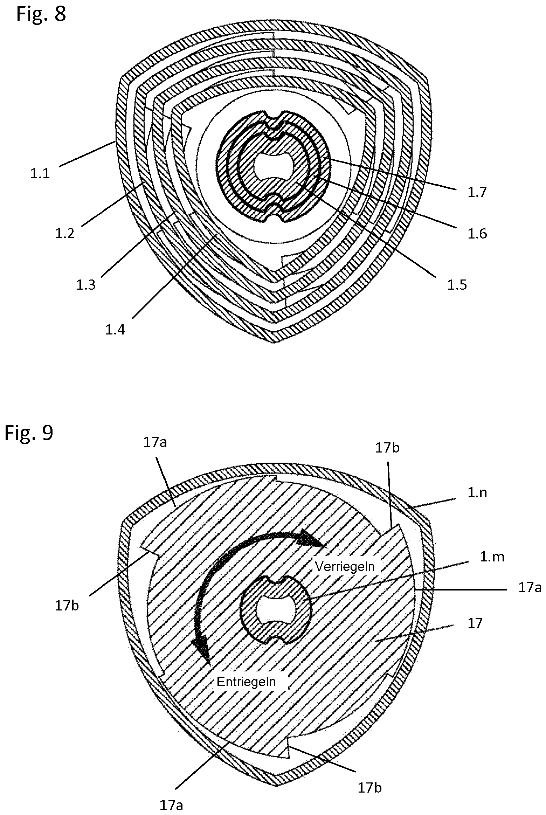

Hinsichtlich der Ausführung der Klemmelemente 17 wird vorzugsweise vorgeschlagen, dass die Innenflächen der äußeren Schaftteile 1.n konvex nach außen gewölbt sind (siehe Fig. 8 und 9) und die Klemmelemente 17 jeweils als Exzenter-Klemmelemente mit konvexen Exzenterbereichen 17a ausgeführt sind, die in einer arretierenden Drehrichtung um die Schaftachse in einen Reibschluss mit der Innenfläche eines äußeren Schaftteiles 1.n bringbar sind, der in entgegengesetzter Drehrichtung wieder lösbar ist (siehe Fig. 9). Die konvexen Exzenterbereiche 17a können dabei in dieser entgegengesetzten Drehrichtung mit einer radial rückspringenden Anschlagschulter 17b enden, um einen arretierenden Reibschluss mit der Innenfläche eines äußeren Schaftteiles 1.n in dieser Drehrichtung zu unterbinden.

Eine Ausführungsform eines Klemmelements 17 ist in der Fig. 9 gezeigt. Es ist scheibenförmig ausgeführt und weist in seinem Umfangsverlauf konvexe Exzenterbereiche 17a auf, welche zwischen einem minimalen und einem maximalen Durchmesser, gemessen von der Schaftachse, verlaufen. Das Klemmelement 17 wird in der gezeigten Ausführungsform durch sechs Sektoren gebildet, wobei drei Sektoren als Kreissektoren ausgeführt sind, deren Kreisbögen auf einem inneren Kreis liegen, und drei Sektoren einen Bogen aufweisen, der jeweils außerhalb des inneren Kreises liegt und dessen Abstand zum Mittelpunkt des inneren Kreises zur Bildung der konvexen Exzenterbereiche 17a von einem minimalen zu einem maximalen Abstand variiert.

Die konvexen Innenflächen der äußeren Schaftteile 1.n können etwa so ausgeführt werden, dass sie im Querschnitt dreiecksförmig mit nach außen gebogenen Seiten erscheinen (siehe Fig. 8 und 9), die jeweils durch Kreisbögen beschrieben werden können, deren Durchmesser größer ist als der maximale Durchmesser des Klemmelements 17. Im Grenzfall kann die Krümmung somit auch verschwinden, sodass die Innenflächen der äußeren Schaftteile 1.n im Querschnitt dreiecksförmig erscheinen. Der minimale Abstand einer Innenfläche eines äußeren Schaftteiles 1.n von der Schaftachse ist jedenfalls größer als der minimale Durchmesser und kleiner als der maximale Durchmesser der Exzenterbereiche 17a des Klemmelements 17. Bei Verdrehen des Klemmelements 17 um die Schaftachse entsteht dadurch ein Reibschluss mit der Innenfläche des äußeren Schaftteiles 1.n.

Die Bedienung des erfindungsgemäßen Stativs erfolgt nun wie folgt. Im Lagerungszustand befindet sich das zentrale Teleskoprohr im eingeschobenen Zustand. Der Betätigungshebel 9 befindet sich im Spannmodus gemäß Fig. 4 und der Befestigungsring 8 ist gegenüber dem äußersten Schaftteil 1.1 arretiert. Ein ungewolltes Ausschieben des Teleskoprohres wird dadurch verhindert. Die Zugorgane 10 sind auf der Spule 11 aufgewickelt.

Um das Stativ zu verwenden wird nun der Befestigungsring 8 gelöst und der Betätigungshebel 9 in den Drehmodus gemäß Fig. 2 verschwenkt. Der zweite Kupplungsteil 12b wird dadurch mithilfe des Rückstellelements 15 vom ersten Kupplungsteil 12a abgehoben, wodurch die Spule 11 um die Schaftachse frei drehbar wird. Zudem wird die Arretierung des äußeren Teleskopaufbaus relativ zum inneren Teleskopaufbau gelöst. Die äußeren Schaftteile 1.n können dadurch auseinandergezogen werden. Über die Klemmelemente 17 werden dadurch auch die inneren Schaftteile l.m auseinandergezogen. Die Standbeine 2 schwenken aus und erreichen eine durch den Befestigungsring 8 und die Streben 7 definierte, maximale Ausschwenkposition. Die Zugorgane 10 werden dabei von der Spule 11 abgewickelt, wodurch sich die Rückstellfeder der Spule 11 spannt. Das Stativ kann in weiterer Folge in der gewünschten Höhe eingestellt werden.

In der gewünschten Höhe kann der Betätigungshebel 9 gemäß der in den Fig. 3 und 4 gezeigten Schwenkbewegung vom Drehmodus in den Spannmodus verschwenkt werden. Hierbei wird einerseits der innere Teleskopaufbau gegenüber dem äußeren Teleskopaufbau arretiert, und andererseits mittels der Exzenterscheibe 16 der zweite Kupplungsteil 12b mit dem ersten Kupplungsteil 12a zunächst in Anlage gebracht, sodass eine freie Drehbewegung der Spule 11 unterbunden wird, und in weiterer Folge die Spule 11 in die aufwickelnde Drehrichtung bewegt. Da das Teleskoprohr bereits arretiert ist und die Standbeine 2 ihre maximale Ausschwenkposition erreicht haben, können dadurch die Zugorgane 10 gespannt werden. Das Stativ wird auf diese Weise durch Verspannen der Zugorgane 10 stabilisiert und nimmt den Aufbau gemäß der Fig. 1 ein. Dabei wird angemerkt, dass das Ausschwenken der Standbeine 2 auch manuell unterbunden werden kann, etwa um das Stativ auch als Einbein ("Monopod" oder "Selfiestick") verwenden zu können.

Um das Stativ wieder abzubauen wird der Betätigungshebel 9 wieder in den Drehmodus gemäß Fig. 2 verschwenkt. Die Zugorgane 10 werden dabei von der Spule 11 abgewickelt und dadurch entspannt. Zudem wird der Formschluss zwischen dem ersten Kupplungsteil 12a und dem zweiten Kupplungsteil 12b gelöst, sodass die Spule 11 wieder frei drehbar wird. Das Teleskoprohr kann nun eingeschoben werden, wobei die Standbeine 2 wieder an den äußersten Schaftteil 1.1 angelegt werden. Über die Klemmelemente 17 werden die inneren Schaftteile 1.m mit eingeschoben. Mithilfe der Rückstellfeder der Spule 11 werden die Zugorgane 10 wieder auf die Spule 11 aufgewickelt. Sobald das Teleskoprohr gänzlich eingeschoben wurde, kann der Befestigungsring 8 arretiert und der Betätigungshebel 9 wieder in den Spannmodus gemäß Fig. 4 verschwenkt werden.

Die Bedienung des Stativs wird dadurch sehr vereinfacht, da der Betätigungshebel 9 sowohl das Teleskoprohr arretiert, als auch die Zugorgane 10 spannt. Der Aufbau ist dabei einfach und gewährleistet kleines Packmaß sowie geringes Gewicht.

### Bezugszeichenliste:

- 1: Schaft
- 1.n: äußere Schaftteile
- 1.m: innere Schaftteile
- 2: Standbeine
- 3: Stativkopf
- 4: Spulenwelle
- 5: Schwenkkopf
- 6: Gerätschaften
- 7: Streben
- 8: Befestigungsring
- 9: Betätigungshebel
- 10: Zugorgane
- 11: Spule
- 12a: Erster Kupplungsteil
- 12b: Zweiter Kupplungsteil
- 13: Zahnrad
- 14: Welle
- 15: Rückstellelement
- 16: Exzenterscheibe
- 17: Klemmelemente
- 17a: konvexe Umfangsbereiche
- 17b: Anschlagschulter

## Patentansprüche

1. Stativ mit einem Stativkopf (3) zur Befestigung von Gerätschaften (6) und einem am Stativkopf (3) befestigten Schaft (1), der aus zumindest zwei teleskopartig ausziehbaren und zusammenschiebbaren Schaftteilen (1.n, 1.m) gebildet wird und mittels eines Feststellmechanismus in einstellbaren Längen arretierbar ist, sowie zumindest drei am Schaft (1) ausschwenkbar gelagerten Standbeinen (2), wobei die Standbeine Zugorgane (10) aufweisen, die mittels einer drehbar angeordneten Spule (11) auf- und abwickelbar und mittels eines Spannelements spannbar sind, **dadurch gekennzeichnet, dass** die Spule (11) mit einer in die aufwickelnde Drehrichtung der Spule (11) wirkenden Rückstellfeder versehen ist, und ein Kupplungsmechanismus vorgesehen ist, der mit einem Bedienelement von einem Drehmodus, bei dem die Spule (11) durch Zugwirkung der Zugorgane (10) in eine abwickelnde Drehrichtung und von der Rückstellfeder in eine aufwickelnde Drehrichtung drehbar ist, in einen Spannmodus, bei dem die Spule (11) gegenüber den Zugorganen (10) arretiert und die Zugorgane (10) mithilfe des Spannelements spannbar sind, überführbar ist.

2. Stativ nach Anspruch 1, **dadurch gekennzeichnet, dass** im Spannmodus die Zugorgane (10) mittels eines in die aufwickelnde Drehrichtung der Spule (11) wirkenden Spannelements spannbar sind.

3. Stativ nach Anspruch 2, **dadurch gekennzeichnet, dass** das Spannelement als Betätigungshebel (9) für eine mit zumindest einem Schraubengang versehene Welle (14) ausgeführt ist, die mit einem Zahnrad (13) kämmt, wobei das Zahnrad (13) koaxial zur Spule (11) angeordnet ist.

4. Stativ nach Anspruch 3, **dadurch gekennzeichnet, dass** es sich bei dem von der mit zumindest einem Schraubengang versehene Welle (14) und dem Zahnrad (13) gebildeten Getriebe um ein Globoid-Schneckengetriebe handelt.

5. Stativ nach Anspruch 3 oder 4, **dadurch gekennzeichnet, dass** der Kupplungsmechanismus einen ersten Kupplungsteil (12a), der an der Spule (11) befestigt ist, sowie einen zweiten Kupplungsteil (12b), der am Zahnrad (13) befestigt und mit dem Zahnrad (13) entlang der Spulenachse verschiebbar ist, umfasst, wobei der zweite Kupplungsteil (12b) im Drehmodus vom ersten Kupplungsteil (12a) beabstandet ist und mittels des Bedienelements entgegen der rückstellenden Kraft eines Rückstellelements (15) in den Spannmodus überführbar sind, bei dem der zweite Kupplungsteil (12b) form- oder kraftschlüssig am ersten Kupplungsteil (12a) anliegt.

6. Stativ nach Anspruch 5, **dadurch gekennzeichnet, dass** zu der mit zumindest einem Schraubengang versehenen Welle (14) koaxial eine Exzenterscheibe (16) angeordnet ist, die mit dem Betätigungshebel (9) drehbar ist und mit ihrem Umfangsbereich am zweiten Kupplungsteil (12b) anliegt oder bei Verschwenken des Betätigungshebels (9) mit dem zweiten Kupplungsteil (12b) in Anlage bringbar ist, wobei durch Verschwenken des Betätigungshebels (9) und der dadurch vermittelten Drehbewegung der Exzenterscheibe (16) der zweite Kupplungsteil (12b) von einer Beabstandung vom ersten Kupplungsteil (12a), die dem Drehmodus entspricht, in einen Form- oder Kraftschluss mit dem ersten Kupplungsteil (12a), der dem Spannmodus entspricht, bringbar ist.

7. Stativ nach einem der Ansprüche 1 bis 6, **dadurch gekennzeichnet, dass** die Spule (11) koaxial zur Schaftachse angeordnet ist.

8. Stativ nach einem der Ansprüche 1 bis 7, **dadurch gekennzeichnet, dass** ein durch Rotation der Schaftteile (1.n, 1.m) um ihre Schaftachse betätigbarer Feststellmechanismus für den Schaft (1) vorgesehen ist.

9. Stativ nach Anspruch 8, **dadurch gekennzeichnet, dass** am Stativkopf (3) ein die Rotation von Schaftteilen (1.n, 1.m) um ihre Schaftachse bewirkendes Feststellelement angeordnet ist.

10. Stativ nach Anspruch 6, 7 und 9, **dadurch gekennzeichnet, dass** es sich bei dem Feststellelement um den Betätigungshebel (9) handelt.

11. Stativ nach einem der Ansprüche 1 bis 10, **dadurch gekennzeichnet, dass** der Schaft (1) einen inneren Teleskopaufbau, der aus inneren Schaftteilen (l.m) gebildet wird, und einen äußeren Teleskopaufbau, der aus teleskopartig ausziehbaren und zusammenschiebbaren sowie drehfest miteinander verbundenen, äußeren Schaftteilen (1.n) gebildet wird, umfasst, wobei der innere Teleskopaufbau innerhalb des innersten Schaftteiles (1.4) des äußeren Teleskopaufbaus angeordnet ist, und der Feststellmechanismus Klemmelemente (17) umfasst, die jeweils mit den inneren Schaftteilen (1.m) drehfest verbunden sind und in einer arretierenden Drehrichtung um die Schaftachse in einen Reibschluss mit einer Innenfläche eines äußeren Schaftteiles (1.n) bringbar sind.

12. Stativ nach Anspruch 11, **dadurch gekennzeichnet, dass** ein in einen Reibschluss mit einer Innenfläche eines äußeren Schaftteiles (1.n) bringbares Klemmelement (17) am nächstinnenliegenden äußeren Schaftteil (1.n) um die Schaftachse drehbar befestigt ist.

13. Stativ nach Anspruch 11 oder 12, **dadurch gekennzeichnet, dass** die Innenflächen der äußeren Schaftteile (1.n) konvex nach außen gewölbt sind und die Klemmelemente (17) jeweils als Exzenter-Klemmelemente mit konvexen Umfangsbereichen (17a) ausgeführt sind, die in einer arretierenden Drehrichtung um die Schaftachse in einen Reibschluss mit der Innenfläche eines äußeren Schaftteiles (1.n) bringbar sind, der in entgegengesetzter Drehrichtung wieder lösbar ist.

## Claims

1. Tripod having a tripod head (3) for fastening equipment (6) and a shaft (1) which is fastened to the tripod head (3), is formed from at least two telescopically extendable and collapsible shaft parts (1.n, 1.m) and can be locked in adjustable lengths by means of a locking mechanism, and having at least three support legs (2) mounted so as to be outwardly pivotable on the shaft (1), wherein the support legs have pulling members (10) which can be wound up and unwound by means of a rotatably arranged coil (11) and can be tensioned by means of a tensioning element, **characterized in that** the coil (11) is provided with a return spring acting in the winding direction of rotation of the coil (11), and a coupling mechanism is provided which can be transferred with an operating element from a rotation mode, in which the coil (11) can be rotated by the pulling action of the pulling members (10) in an unwinding direction of rotation and by the return spring in a winding direction of rotation, into a tensioning mode, in which the coil (11) is locked with respect to the pulling members (10) and the pulling members (10) can be tensioned by means of the tensioning element.

2. Tripod according to claim 1, **characterized in that,** in the tensioning mode, the pulling members (10) can be tensioned by means of a tensioning element acting in the winding direction of rotation of the coil (11).

3. Tripod according to claim 2, **characterized in that** the tensioning element is designed as an actuating lever (9) for a shaft (14) which is provided with at least one screw thread and meshes with a gearwheel (13), wherein the gearwheel (13) is arranged coaxially with the coil (11).

4. Tripod according to claim 3, **characterized in that** the shaft (14) provided with at least one screw thread and the gear formed by the gearwheel (13) concern a globoidal worm gear.

5. Tripod according to claim 3 or 4, **characterized in that** the coupling mechanism comprises a first coupling part (12a), which is fastened to the coil (11), and a second coupling part (12b), which is fastened to the gearwheel (13) and is displaceable with the gearwheel (13) along the coil axis, wherein the second coupling part (12b) is spaced apart from the first coupling part (12a) in the rotation mode and is transferable into the tensioning mode by means of the operating element against the restoring force of a restoring element (15), in which the second coupling part (12b) rests positively or non-positively against the first coupling part (12a) .

6. Tripod according to claim 5, **characterized in that** an eccentric disk (16) is arranged coaxially with the shaft (14) provided with at least one screw thread, said eccentric disk (16) being rotatable with the actuating lever (9) and resting with its circumferential region against the second coupling part (12b) or being adapted to rest against the second coupling part (12b) upon pivoting of the actuating lever (9), wherein the second coupling part (12b) can be brought from a distance from the first coupling part (12a), which corresponds to the rotation mode, into a positive or non-positive connection with the first coupling part (12a), which corresponds to the tensioning mode, by pivoting the actuating lever (9) and the rotary movement of the eccentric disk (16), which is produced thereby.

7. Tripod according to one of claims 1 to 6, **characterized in that** the coil (11) is arranged coaxially to the shaft axis.

8. Tripod according to one of claims 1 to 7, **characterized in that** a locking mechanism for the shaft (1) is provided which can be actuated by rotation of the shaft parts (1.n, 1.m) about their shaft axis.

9. Tripod according to claim 8, **characterized in that** a locking element effecting the rotation of shaft parts (1.n, 1.m) about their shaft axis is arranged on the tripod head (3).

10. Tripod according to claims 6, 7 and 9, **characterized in that** the locking element is the actuating lever (9).

11. Tripod according to one of claims 1 to 10, **characterized in that** the shaft (1) comprises an inner telescopic assembly which is formed from inner shaft parts (1.m) and an outer telescopic assembly which is formed from outer shaft parts (1.n) which can be telescopically pulled out and pushed together and which are connected to one another in a rotationally fixed manner, wherein the inner telescopic assembly is arranged inside the innermost shaft part (1.4) of the outer telescopic assembly, and the locking mechanism comprises clamping elements (17) which are each connected in a rotationally fixed manner to the inner shaft parts (1.m) and can be brought into frictional engagement with an inner surface of an outer shaft part (1.n) in a locking direction of rotation about the shaft axis.

12. Tripod according to claim 11, **characterized in that** a clamping element (17) which can be brought into frictional engagement with an inner surface of an outer shaft part (1.n) is fastened to the closest inner outer shaft part (1.n) so as to be rotatable about the shaft axis.

13. Tripod according to claim 11 or 12, **characterized in that** the inner surfaces of the outer shaft parts (1.n) are convexly curved outwards and the clamping elements (17) are each designed as eccentric clamping elements with convex circumferential regions (17a) which can be brought into frictional engagement with the inner surface of an outer shaft part (1.n) in a locking direction of rotation about the shaft axis and which can be released again in the opposite direction of rotation.

## Revendications

1. Trépied comportant une tête de trépied (3) pour la fixation d'appareils (6) et une tige (1) fixée à la tête de trépied (3), qui est formée d'au moins deux parties de tige (1.n, 1.m) qui peuvent être déployées et rapprochées de manière télescopique et qui peuvent être bloquées à des longueurs réglables au moyen d'un mécanisme de verrouillage, ainsi qu'au moins trois pieds de support (2) montés sur la tige (1) de manière à pouvoir être écartés par pivotement, les pieds de support présentant des organes de traction (10) qui peuvent être enroulés et déroulés au moyen d'une bobine (11) disposée de manière rotative et qui peuvent être tendus au moyen d'un élément de tension, **caractérisé en ce que** la bobine (11) est pourvue d'un ressort de rappel qui agit dans le sens de rotation d'enroulement de la bobine (11) et il est prévu un mécanisme d'accouplement qui peut, au moyen d'un élément de commande, être transféré d'un mode de rotation dans lequel la bobine (11) peut être tournée par l'action de traction des organes de traction (10) dans un sens de rotation de déroulement et par le ressort de rappel dans un sens de rotation d'enroulement, dans un mode de tension dans lequel la bobine (11) est bloquée par rapport aux organes de traction (10) et les organes de traction (10) peuvent être tendus au moyen de l'élément de tension.

2. Trépied selon la revendication 1, **caractérisé en ce que**, dans le mode de tension, les organes de traction (10) peuvent être tendus au moyen d'un élément de tension agissant dans le sens de rotation d'enroulement de la bobine (11).

3. Trépied selon la revendication 2, **caractérisé en ce que** l'élément de tension est réalisé sous la forme d'un levier d'actionnement (9) pour un arbre (14) qui est pourvu d'au moins un filetage et qui engrène avec une roue dentée (13), la roue dentée (13) étant disposée coaxialement à la bobine (11).

4. Trépied selon la revendication 3, **caractérisé en ce que** l'engrenage formé par l'arbre (14) pourvu d'au moins un filetage et la roue dentée (13) est un engrenage à vis sans fin globique.

5. Trépied selon la revendication 3 ou 4, **caractérisé en ce que** le mécanisme d'accouplement comprend une première partie d'accouplement (12a) fixée à la bobine (11) ainsi qu'une deuxième partie d'accouplement (12b) fixée à la roue dentée (13) et pouvant coulisser avec la roue dentée (13) le long de l'axe de la bobine, la deuxième partie d'accouplement (12b) étant espacée de la première partie d'accouplement (12a) dans le mode de rotation et pouvant être transférée au moyen de l'élément de commande, contre la force de rappel d'un élément de rappel (15), dans le mode de tension dans lequel la deuxième partie d'accouplement (12b) s'appuie par complémentarité de forme ou par force contre la première partie d'accouplement (12a).

6. Trépied selon la revendication 5, **caractérisé en ce qu'**un disque excentrique (16) est disposé coaxialement à l'arbre (14) pourvu d'au moins un filetage, lequel disque excentrique (16) peut être tourné avec le levier d'actionnement (9) et s'appuie par sa zone périphérique sur la deuxième partie d'accouplement (12b) ou peut être amené en contact avec la deuxième partie d'accouplement (12b) en faisant pivoter le levier d'actionnement (9), le pivotement du levier d'actionnement (9) et le mouvement de rotation du disque excentrique (16) qui en résulte permettant d'amener la deuxième partie d'accouplement (12b) d'un espacement par rapport à la première partie d'accouplement (12a), qui correspond au mode de rotation, dans un engagement par complémentarité de forme ou par force avec la première partie d'accouplement (12a), qui correspond au mode de tension.

7. Trépied selon l'une des revendications 1 à 6, **caractérisé en ce que** la bobine (11) est disposée coaxialement à l'axe de tige.

8. Trépied selon l'une des revendications 1 à 7, **caractérisé en ce qu'**il est prévu un mécanisme de verrouillage de la tige (1) pouvant être actionné par rotation des parties de tige (l.n, 1.m) autour de leur axe de tige.

9. Trépied selon la revendication 8, **caractérisé en ce qu'**un élément de verrouillage produisant la rotation de parties de tige (1.n, 1.m) autour de leur axe de tige est disposé sur la tête de trépied (3).

10. Trépied selon les revendications 6, 7 et 9, **caractérisé en ce que** l'élément de verrouillage est le levier d'actionnement (9) .

11. Trépied selon l'une des revendications 1 à 10, **caractérisé en ce que** la tige (1) comprend une structure télescopique intérieure formée par des parties de tige intérieures (l.m) et une structure télescopique extérieure formée par des parties de tige extérieures (1.n) pouvant être déployées et rapprochées de manière télescopique et reliées entre elles de manière solidaire en rotation, la structure télescopique intérieure étant disposée à l'intérieur de la partie de tige la plus intérieure (1.4) de la structure télescopique extérieure, et le mécanisme de verrouillage comprenant des éléments de serrage (17) qui sont chacun reliés aux parties de tige intérieures (1.m) de manière solidaire en rotation et peuvent être amenés en engagement par friction avec une surface intérieure d'une partie de tige extérieure (1.n) dans un sens de rotation de blocage autour de l'axe de tige.

12. Trépied selon la revendication 11, **caractérisé en ce qu'**un élément de serrage (17) pouvant être amené en engagement par friction avec une surface intérieure d'une partie de tige extérieure (1.n) est fixé à la partie de tige extérieure (1.n) interne la plus proche de manière à pouvoir tourner autour de l'axe de tige.

13. Trépied selon la revendication 11 ou 12, **caractérisé en ce que** les surfaces intérieures des parties de tige extérieures (1.n) sont courbées vers l'extérieur de manière convexe et les éléments de serrage (17) sont chacun réalisés sous la forme d'éléments de serrage excentriques avec des zones périphériques convexes (17a) qui, dans un sens de rotation de blocage autour de l'axe de tige, peuvent être amenées en engagement de friction avec la surface intérieure d'une partie de tige extérieure (1.n), lequel engagement peut être à nouveau libéré dans le sens de rotation opposé.
